# EUROPÄISCHE PATENTSCHRIFT

(11) **EP 1 951 773 B1**
(45) Veröffentlichungstag und Bekanntmachung des Hinweises auf die Patenterteilung: **29.07.2009**
(21) Anmeldenummer: 06807527.4
(22) Anmeldetag: 25.10.2006
(51) Int. Cl.: C08F 283/06, C10L 3/00, C11D 3/37

(54) **VERFAHREN ZUR HERSTELLUNG VON PFROPFPOLYMERISATEN**
PROCESS FOR PREPARING GRAFT POLYMERS
PROCEDE DE FABRICATION DE POLYMERES GREFFES

(30) Priorität: 04.11.2005 DE 102005053064
(43) Veröffentlichungstag der Anmeldung: 06.08.2008
(73) Patentinhaber: BASF SE, 67056 Ludwigshafen (DE)
(72) Erfinder: WIDMAIER, Ralf, 68167 Mannheim (DE); WEGMANN, Ludger, 67063 Ludwigshafen (DE); MAURI, Antonietta, 76857 Albersweiler (DE); MATHAUER, Klemens, 69115 Heidelberg (DE); JAHNEL, Wolfgang, 76756 Bellheim (DE); HERRERA TABOADA, Lidcay, B-8400 Oostende (BE); NEUBECKER, Karin, 67227 Frankenthal (DE); KHVOROST, Alexander, 69514 Laudenbach (DE)
(86) Internationale Anmeldenummer: PCT/EP2006/067745
(87) Internationale Veröffentlichungsnummer: WO 2007/051742

(56) Entgegenhaltungen:
- EP-A2- 0 512 250
- WO-A-02/18526
- DE-A1- 4 019 418
- DE-A1- 19 935 063
- GB-A- 1 224 425

## Beschreibung

Gegenstand der vorliegenden Erfindung ist Verfahren zur Herstellung von Pfropfpolymerisaten durch Polymerisation von
A) 10 bis 95 Gew.-% Pfropfmonomeren A), enthaltend, bezogen auf die Gesamtmenge der Pfropfmonomeren A)
   a) 1 bis 99 Gew.-% wenigstens eines Vinylesters [Monomere a)]
   b) 1 bis 99 Gew.-% wenigstens eines N-Vinyllactams [Monomere b)] sowie gegebenenfalls
   c) 0 bis 10 Gew.-% wenigstens eines weiteren ethylenisch ungesättigten Mononomeren [Monomere c)], wobei sich die Mengen an Monomeren a) bis c) zu 100 Gew.-% addieren,
   in Gegenwart von
B) 5 bis 90 Gew.-% wenigstens eines Polyalkylenoxids B), welches aus mindestens 3 Einheiten eines C2- bis C4-Alkylenoxids aufgebaut ist, wobei sich die Gesamtmengen an Pfropfmonomeren A) und Polyalkylenoxid B) zu 100 Gew.-% addieren,
welches dadurch gekennzeichnet ist, dass
i) ≥ 50 Gew.-% der Gesamtmenge an Polyalkylenoxid B) und ≤ 10 Gew.-% der Gesamtmenge an Pfropfmonomeren A) in einem Reaktionsgefäß vorgelegt werden, anschließend
ii) die gegebenenfalls verbliebene Restmenge an Polyalkylenoxid B) sowie ≥ 90 Gew.-% der Gesamtmenge an Pfropfmonomeren A) unter Polymerisationsbedingungen dem Reaktionsgefäß zudosiert werden, dabei
iii) die Hauptmengen der Monomeren a) und der Monomeren b) im Verfahrensschritt ii) parallel zudosiert werden,
iv) die Polymerisation in Anwesenheit von ≥ 2 Gew.-%, bezogen auf die Summe der Gesamtmengen an Propfmonomeren A) und Polyalkylenoxid B), wenigstens eines aprotischen organischen Lösemittels L) erfolgt, wobei gegebenenfalls eine Teil- oder die Gesamtmenge des Lösemittels L) in Verfahrensschritt i) im Reaktionsgefäß vorgelegt und die Gesamtmenge bzw. die gegebenenfalls verbliebene Restmenge des Lösemittels L) dem Reaktionsgefäß in Verfahrensschritt ii) zudosiert wird, und
v) der Wassergehalt des im Reaktionsgefäß vorliegenden Polymerisationsgemisches während der Polymerisation zu jedem Zeitpunkt ≤ 2 Gew.-%, bezogen auf die Summe der dem Reaktionsgefäß zum jeweiligen Zeitpunkt zudosierten Gesamtmengen an Pfropfmonomeren A) und Polyalkylenoxid B), ist.

Gegenstand der vorliegenden Erfindung sind ebenfalls die nach dem Verfahren zugänglichen Propfpolymerisate sowie deren Verwendung zur Inhibierung von Gashydraten.

Zur Herstellung und Verwendung von Pfropfpolymerisaten ist von nachfolgendem Stand der Technik auszugehen.

In der EP-A 285 038 wird die Verwendung von Pfropfpolymerisaten auf Basis von Polyalkylenoxiden, N-Vinyl-2-pyrrolidon und Vinylestern als Vergrauungsinhibitoren beim Waschen von Textilgut beschrieben. Die bevorzugte Herstellung der Pfropfpolymerisate erfolgt dabei in Substanz; sie kann aber auch in Wasser, Alkoholen, Glykolen oder Glykolethern sowie Gemischen davon erfolgen.

Die WO 00/18375 offenbart die Verwendung von wasserlöslichen oder wasserdispergierbaren Polyether-haltigen Polymerisaten als Überzugsmittel, Bindemittel und/oder filmbildender Hilfsstoff in pharmazeutischen Darreichungsformen. Hierfür werden Pfropfpolymerisate auf Basis von Polyethern und Vinylestern sowie optional N-Vinyllactamen eingesetzt. Die Herstellung der Pfropfpolymerisate erfolgt dabei in Substanz, aber auch in Wasser, Alkoholen, Glykolen oder Glykolethern sowie Gemischen davon. In den Beispielen wird die Pfropfpolymerisation in Methanol durchgeführt.

Gemäß der DE-A 19935063 wird die Verwendung von Pfropfpolymerisaten zur Inhibierung von Gashydraten offenbart. Dabei basieren die Pfropfpolymerisate bevorzugt auf einem hydrophilen Polymergrundgerüst mit mindestens einem Heteroatom in der Polymerhauptkette, beispielsweise Polyalkylenglykole. Als aufzupfropfende Einheiten werden N-Vinyllactame und optional Vinylester verwendet. Die Pfropfreaktionen erfolgen bevorzugt in Substanz oder in Lösung, beispielsweise in Wasser und/oder Methanol.

Auch die WO 02/18526 offenbart die Verwendung von Pfropfpolymerisaten als Vergrauungsinhibitoren beim Waschen und Nachbehandeln von Textilgut. Als Pfropfgrundlage werden beispielsweise Polyalkylenoxide und als Pfropfmonomeren Vinylester und N-Vinyllactame eingesetzt. Die Herstellung der Pfropfpolymerisate in den Beispielen erfolgt dergestalt, dass Polyethylenglykol vorgelegt und ein Vinylacetat/N-Vinylcaprolactam-Gemisch parallel mit einem Radikalinitiator/Essigsäureethylester-Gemisch unter Polymerisationsbedingungen zudosiert werden. Damit die Viskosität nicht zu stark ansteigt, wird dem Reaktionsgemisch während der Polymerisationsreaktion Wasser zugesetzt (Pfropfpolymerisat 1 und 2). Im Unterschied hierzu, werden bei der Herstellung der Pfropfpolymerisate 3, 4 und 5 Vinylacetat und N-Vinylcaprolactam sequenziell zugesetzt.

Nachteilig an den Pfropfpolymerisaten des Standes der Technik ist, dass wässrige Lösungen dieser Pfropfpolymerisate mit einem Pfropfpolymerisatgehalt ≥ 40 Gew.-%, stark gefärbt und häufig trüb sowie darüber hinaus auch noch hochviskos sind.

Aufgabe der vorliegenden Erfindung war es, ein Verfahren zur Herstellung von Pfropfpolymerisaten auf Basis von Polyalkylenoxiden und der Pfropfmonomeren Vinylester und Vinyllactame bereitzustellen, welches Pfropfpolymerisate zur Verwendung als Gashydrat inhibitoren mit verbesserten Eigenschaften liefert.

Überraschender Weise wurde die Aufgabe durch das eingangs definierte Verfahren gelöst.

Die Pfropfpolymerisate sind erhältlich, indem man Pfropfmonomere A) in Gegenwart wenigstens eines Polyalkylenoxids B) polymerisiert. Es handelt sich demnach um eine Pfropfpolymerisation, bei der die Pfropfmonomeren A) auf wenigstens ein Polyalkylenoxid B) gepfropft werden.

Der Anteil der Pfropfmonomere A) beträgt 10 bis 95 Gew.-%, bevorzugt 20 bis 75 Gew.-% und insbesondere bevorzugt 25 bis 60 Gew.-%, jeweils bezogen auf die Gesamtmenge von Pfropfmonomeren A) und Polyalkylenoxiden B). Dementsprechend beträgt der Anteil der Polyalkylenoxide B) 5 bis 90 Gew.-%, bevorzugt 25 bis 80 Gew.-% und insbesondere bevorzugt 40 bis 75 Gew.-%.

Die Pfropfmonomeren A) enthalten, bezogen auf die Gesamtmenge der Pfropfmonomeren A),
a) 1 bis 99 Gew.-%, bevorzugt 10 bis 70 Gew.-% und insbesondere 15 bis 55 Gew.-% wenigstens eines Monomeren a),
b) 1 bis 99 Gew.-%, bevorzugt 30 bis 90 Gew.-% und insbesondere 45 bis 85 Gew.-% wenigstens eines Monomeren b), und
c) 0 bis 10 Gew.-%, bevorzugt 0 bis 5 Gew.-% und insbesondere bevorzugt 0 bis 2 Gew.-% wenigstens eines weiteren, sich von den Monomeren a) und b) unterscheidenden ethylenisch ungesättigten Monomeren c).

Geeignete Vinylester a) sind beispielsweise Vinylester von gesättigten Carbonsäuren mit 1 bis 20, insbesondere 1 bis 6 C-Atomen. Beispiele sind Vinylacetat, Vinylpropionat, Vinylbutanoat, Vinylhexanoat und/oder Vinyloctanoat. Bevorzugt verwendet man Vinylacetat und Vinylpropionat. Insbesondere bevorzugt wird Vinylacetat eingesetzt. Erfindungsgemäß kann ein Vinylester allein oder eine Mischung mehrerer Vinylester eingesetzt werden.

Geeignete N-Vinyllactame b) sind N-Vinyllactame mit 4 bis 13 C-Atomen im Lactamring. Beispiele sind N-Vinyl-2-pyrrolidon, N-Vinylcaprolactam, N-Vinylvalerolactam, N-Vinyllaurolactam, N-Vinyl-2-piperidon, N-Vinyl-2-pyridon, N-Vinyl-3-methyl-2-pyrrolidon, N-Vinyl-4-methyl-2-pyrrolidon und/oder N-Vinyl-5-methyl-2-pyrrolidon. Bevorzugt verwendet man N-Vinyl-2-pyrrolidon, N-Vinylcaprolactam und/oder N-Vinyl-2-piperidon und insbesondere bevorzugt N-Vinylcaprolactam. Erfindungsgemäß kann ein N-Vinyllactam allein oder eine Mischung mehrerer N-Vinyllactame eingesetzt werden.

Geeignete copolymerisierbare Monomere c) sind beispielsweise Vinylcarbonsäureamide wie N-Vinylformamid, N-Vinyl-N-methylformamid, N-Vinylacetamid, N-Vinyl-N-methylacetamid, N-Vinyl-N-methylpropionamid und N-Vinylpropionamid. Vorzugsweise verwendet man N-Vinylformamid und/oder N-Vinyl-N-methylacetamid. Die einpolymerisierten Monomereinheiten von N-Vinylformamid und/oder N-Vinyl-N-methylacetamid können teilweise oder vollständig hydrolysiert werden.

Geeignete Comonomere c) sind auch monoethylenisch ungesättigte Mono- und Dicarbonsäuren(anhydride) mit 3 bis 6 C-Atomen, wie Acrylsäure, Methacrylsäure, Crotonsäure, Maleinsäure(anhydrid), Fumarsäure, Itakonsäure(anhydrid) und Citraconsäure(anhydrid).

Weitere geeignete Monomere c) sind die Amide, Ester und Nitrile der vorgenannten monoethylenisch ungesättigten C3- bis C6-Carbonsäuren, wie beispielsweise die Amide Acrylamid, Methacrylamid sowie N-Alkyl- und N,N-Dialkylamide mit Alkylresten von 1 bis 6 C-Atomen, wie N-Methylacrylamid, N,N-Dimethylacrylamid, N-Methylmethacrylamid, N,N-Dimethylmethacrylamid, N-Ethylacrylamid, N-Propylacrylamid, tert.-Butylacrylamid und tert.-Butylmethacrylamid sowie die basischen (Meth)acrylamide, wie 2-N,N-Dimethylaminoethylacrylamid, 2-N,N-Dimethylaminoethylmethacrylamid, 2-N,N-Diethylaminoethylacrylamid, 2-N,N-Diethylaminoethylmethacrylamid, 3-N,N-Dimethylaminopropylacrylamid, 3-N,N-Diethylaminopropylacrylamid, 3-N,N-Dimethylaminopropylmethacrylamid und 3-N,N-Diethylaminopropylmethacrylamid.

Andere geeignete Monomere c) sind die Ester der monoethylenisch ungesättigten Carbonsäuren mit C1- bis C6-Alkoholen, wie Methylacrylat, Methylmethacrylat, Ethylacrylat und Ethylmethacrylat oder mit Glykolen bzw. Polyglykolen, wobei jeweils nur eine OH-Gruppe der Glykole und Polyglykole mit einer ethylenisch ungesättigten Carbonsäure verestert ist, wie Hydroxyethylacrylat, Hydroxyethylmethacrylat, Hydroxypropylacrylate, Hydroxybutylacrylate, Hydroxypropylmethacrylate, Hydroxybutylmethacrylate, sowie die (Meth)acrylsäuremonoester von Polyalkylenglykolen eines Molgewichts von 200 bis 10 000. Weiterhin geeignet sind die Ester der vorgenannten ethylenisch ungesättigten Carbonsäuren mit Pyrrolidon-Derivaten, wie beispielsweise 2-(N-Pyrrolidon)-ethylacrylat oder 2-(N-Pyrrolidon)-ethylmethacrylat, und Aminoalkoholen, wie 2-N,N-Dimethylaminoethylacrylat, 2-N,N-Dimethylaminoethylmethacrylat, 2-N,N-Diethylaminoethylacrylat, 2-N,N-Diethylaminoethylmethacrylat, 3-N,N-Dimethylaminopropylacrylat, 3-N,N-Dimethylaminopropylmethacrylat, 3-N,N-Diethylaminopropylacrylat, 3-N,N-Diethylaminopropylmethacrylat, 4-N,N-Dimethylaminobutylacrylat, 4-N,N-Diethylaminobutylacrylat, 5-N,N-Dimethylaminopentylacrylat, Dimethylaminoneopentylmethacrylat und 6-N,N-Dimethylaminohexylacrylat. Die basischen (Meth)acrylate und (Meth)acrylamide werden in Form der freien Basen, der Salze mit Mineralsäuren, wie Salzsäure, Schwefelsäure und Salpetersäure, oder in quaternisierter Form eingesetzt. Geeignete Quaternisierungsmittel sind beispielsweise Dimethylsulfat, Methylchlorid, Ethylchlorid, Benzylchlorid oder Diethylsulfat.

Als Nitrile vorgenannter ethylenisch ungesättigter Carbonsäure werden beispielhaft Acrylnitril und Methacrylnitril genannt.

Weiterhin sind als Monomere c) geeignet N-Vinylimidazol sowie substituierte N-Vinylimidazole, wie N-Vinyl-2-methylimidazol, N-Vinyl-4-methylimidazol, N-Vinyl-5-methylimidazol und N-Vinyl-2-ethylimidazol, N-Vinylimidazoline, wie N-Vinylimidazolin, N-Vinyl-2-methylimidazolin und N-Vinyl-2-ethylimidazolin sowie N-Vinylimidazolidinone, wie N-Vinyl-2-imidazolidinon und N-Vinyl-4-methyl-2-imidazolidinon. N-Vinylimidazole, N-Vinylimidazoline und N-Vinylimidazolidinone werden außer in Form der freien Basen auch in mit Mineralsäuren neutralisierter oder in quaternisierter Form eingesetzt, wobei die Quaternisierung vorzugsweise mit Dimethylsulfat, Diethylsulfat, Benzylchlorid, Methylchlorid oder Ethylchlorid vorgenommen wird.

Schließlich eignen sich als Monomere c) Sulfogruppen enthaltende Monomere, wie Vinylsulfonsäure, Allylsulfonsäure, Methallylsulfonsäure, Styrolsulfonsäure, Acrylsäure-3-sulfopropylester, Methacrylsäure-3-sulfopropylester und 2-Acrylamido-2-methylpropansulfonsäure. Die Säuregruppen aufweisenden Verbindungen können in Form der freien Säuren, der Ammonium-, Alkalimetall- und Erdalkalimetallsalze bei der Pfropfpolymerisation eingesetzt werden.

Als Monomere c) können auch vernetzend wirkende Monomere, wie beispielsweise Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat, sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, N,N-Divinyl-2-imidazolidinon, Pentaerythrittriallylether und Pentaallylsucrose eingesetzt werden. Bevorzugte vernetzende Monomere c) sind wasserlösliche Monomere, wie Glykoldiacrylat oder Glykoldiacrylate von Polyethylenglykolen eines Molekulargewichts (Zahlenmittel) von 300 bis 10 000.

Es versteht sich, dass auch Mischungen mehrerer Monomere c) verwendet werden können.

Von den Monomeren c) werden N-Vinylimidazol, Acrylsäure, Methacrylsäure, Methacrylamid, N,N-Dimethylacrylamid, N-Methylmethacrylamid, tert.-Butylacrylamid, tert.-Butylmethacrylamid, Dimethylaminoethylmethacrylamid, Hydroxyethylacrylat, 2-(N-Pyrrolidon)-ethylacrylat, 2-(N-Pyrrolidon)-ethylmethacrylat, 2-Acrylamido-2-methylpropansulfonsäure bevorzugt eingesetzt. Erfindungsgemäß vorteilhaft, werden jedoch keine Monomeren c) eingesetzt.

Die Polymerisation der Pfropfmonomere A) erfolgt erfindungsgemäß in Gegenwart wenigstens eines Polyalkylenoxids B), welches aus mindestens 3 Einheiten eines C2- bis C4-Alkylenoxids aufgebaut ist. Solche Polyalkylenoxide B) sind dem Fachmann bekannt.

Die Polyalkylenoxide B) können Homo- und Copolymerisate von C2- bis C4-Alkylenoxiden sein. Sie werden beispielsweise durch Homo- oder Copolymerisation von C2- bis C4-Alkylenoxiden, wie insbesondere Ethylenoxid, Propylenoxid, n-Butylenoxid und/oder Isobutylenoxid, hergestellt. Bei den Copolymerisaten kann es sich entweder um statistische Copolymerisate handeln, wenn man Mischungen aus wenigstens zwei Alkylenoxiden polymerisiert oder um Blockcopolymerisate, wenn man zunächst ein Alkylenoxid, beispielsweise Ethylenoxid, polymerisiert und dann ein anderes Alkylenoxid polymerisiert, z.B. Propylenoxid. Die Blockcopolymerisate können beispielsweise dem Typ AB, ABA oder BAB zugeordnet werden, wobei A beispielsweise ein Polyethylenoxidblock und B ein Polypropylenoxidblock bedeutet. Diese Copolymerisate können gegebenenfalls außerdem noch n-Butylenoxid und/oder Isobutylenoxid einpolymerisiert enthalten.

Die Polyalkylenoxide B) enthalten mindestens 3 Alkylenoxideinheiten im Molekül. Die Polyalkylenoxide B) können jedoch beispielsweise bis zu 50 000 Alkylenoxideinheiten im Molekül enthalten. Bevorzugt kommen solche Polyalkylenoxide B) in Betracht, die 5 bis 1000 Alkylenoxideinheiten im Molekül aufweisen.

Bevorzugt sind Polyalkylenoxide B) mit einem zahlenmittleren Molekulargewicht von ≥ 200 und ≤ 50000 g/mol und insbesondere ≥ 300 und ≤ 35000 g/mol.

Vorteilhaft zum Einsatz gelangende Polyalkylenoxide B) sind die Homopolymerisate aus Ethylenoxid oder Propylenoxid sowie die Blockcopolymerisate von Ethylenoxid und Propylenoxid und statistisch aufgebaute Copolymerisate aus Ethylenoxid und Propylenoxid, die durch Copolymerisieren eines Mischgases aus Ethylenoxid und Propylenoxid erhältlich sind.

Besonders bevorzugt werden Homopolymerisate von Ethylenoxid (= Polyethylenglykole), insbesondere solche mit einem zahlenmittleren Molekulargewicht von 600 bis 10000 g/mol als Polyalkylenoxid B) eingesetzt.

Unter einem Polyalkylenoxid B) sollen im Sinne der vorliegenden Erfindung auch Additionsprodukte von C2- bis C4-Alkylenoxiden an Alkohole, Carbonsäuren, Phenole und Amine verstanden werden. Diese Additionsprodukte erhält man durch Umsetzung der C2- bis C4-Alkylenoxide mit den entsprechenden Alkoholen, Carbonsäuren, Phenolen und Aminen.

Für die Umsetzung mit den Alkylenoxiden geeignete Alkohole haben beispielsweise 1 bis 30 C-Atome, wie Methanol, Ethanol, n-Propanol, iso-Propanol, n-Butanol, n-Octanol, 2-Ethylhexanol, Decanol, Dodecanol, Palmitylalkohol, Cetylalkohol und Stearylalkohol. Von technischem Interesse sind insbesondere die nach dem Oxoverfahren erhältlichen Alkohole, z.B. C10-Alkohole, C13-Oxoalkohole oder native Alkohole wie C10/C18-Talgfettalkohole. Außer den genannten einwertigen Alkoholen kann man selbstverständlich auch zwei- und mehrwertige Alkohole einsetzen, z.B. Glykol, Glycerin, Erythrit, Pentaerythrit und Sorbit. Die Alkohole werden üblicherweise im Molverhältnis 1:5 bis 1:1000, bevorzugt 1:10 bis 1:200 mit mindestens einem C2- bis C4-Alkylenoxid umgesetzt.

Für die Umsetzung mit den Alkylenoxiden geeignete Carbonsäuren sind insbesondere Fettsäuren, bevorzugt solche mit 8 bis 25 C-Atomen im Molekül. Beispiele sind Laurinsäure, Myristinsäure, Stearinsäure, Palmitinsäure, Kokosfettsäure, Talgfettsäure und Ölsäure.

Für die Umsetzung mit den Alkylenoxiden geeignete Phenole sind beispielsweise C1-bis C12-Alkylphenole, wie n-Decylphenole, n-Octylphenole, Isobutylphenole und Methylphenole.

Für die Umsetzung mit den Alkylenoxiden geeignete Amine sind z.B. sekundäre C2-bis C30-Amine, wie beispielsweise Di-n-butylamin, Di-n-octylamin, Dimethylamin und Distearylamin. Das Molverhältnis von Amin zu mindestens einem Alkylenoxid beträgt in der Regel 1:5 bis 1:1000 und liegt vorzugsweise in dem Bereich von 1:10 bis 1:200.

Bei den Additionsprodukten von Alkylenoxiden an Alkohole, Phenole, Säuren oder Amine kann man die Alkylenoxide in Form eines Mischgases an die vorstehend genannten Verbindungen addieren, oder man führt die Umsetzung zunächst mit Ethylenoxid und anschließend mit Propylenoxid durch. Ebenso ist es möglich, zunächst Propylenoxid und anschließend Ethylenoxid an die genannten Verbindungen zu addieren. Außer Ethylenoxid und Propylenoxid kann man jeweils gegebenenfalls noch Isobutylenoxid und/oder n-Butylenoxid addieren. Bei der nacheinander erfolgenden Addition der Alkylenoxide entstehen die entsprechenden Blockcopolymerisate.

In manchen Fällen kann es außerdem noch von Vorteil sein, die freien OH-Gruppen der Alkoxylierungsprodukte mit einer Endgruppe zu verschließen. Der Endgruppenverschluß ist dem Fachmann geläufig und kann beispielsweise mit einem Alkylrest unter Ausbildung einer Ethergruppe erfolgen. Beispielsweise kann man die Alkoxylierungsprodukte mit Alkylierungsmitteln wie Dimethylsulfat umsetzen. Die endständigen OH-Gruppen können gegebenenfalls auch durch Umsetzung mit Carbonsäuren, z.B. Essigsäure oder Stearinsäure, verestert werden.

Erfindungsgemäß kann auch eine Mischung mehrerer Polyalkylenoxide B) eingesetzt werden.

In einer bevorzugten Ausführungsform werden
20 bis 75 Gew.-% Pfropfmonomere A), enthaltend
   a) 10 bis 70 Gew.-% Monomere a) sowie
   b) 30 bis 90 Gew.-% Monomere b),
   und
25 bis 80 Gew.-% Polyalkylenoxid B)
eingesetzt.

Insbesondere bevorzugt werden
25 bis 60 Gew.-% Pfropfmonomere A), enthaltend
   a) 15 bis 55 Gew.-% Monomere a) sowie
   b) 45 bis 85 Gew.-% Monomere b),
   und
40 bis 75 Gew.-% Polyalkylenoxid B)
eingesetzt.

Verfahrenswesentlich ist, das die Polymerisationsreaktion in Anwesenheit von ≥ 2 Gew.-%, bezogen auf die Summe der Gesamtmengen an Propfmonomeren A) und Polyalkylenoxid B), wenigstens eines aprotischen organischen Lösemittels L) erfolgt. Als aprotisches organisches Lösemittel L) kommen alle organischen Lösemittel in Frage, welche unter Polymerisationsbedingungen kein ionisierbares Proton im Molekül enthalten bzw. einen pKs-Wert aufweisen, welcher größer als der von Wasser ist. Beispiele für derartige Lösemittel L) sind aromatische Kohlenwasserstoffe, wie Toluol, o-, m-, p-Xylol und Isomerengemische sowie Ethylbenzol, lineare oder cyclische aliphatische Kohlenwasserstoffe, wie Pentan, Hexan, Heptan, Octan, Nonan, Dodecan, Cyclohexan, Cyclooctan, Methylcyclohexan, sowie Mischungen der genannten Kohlenwasserstoffe und Benzinfraktionen, welche keine polymerisierbaren Monomeren enthalten, aliphatische oder aromatische Halogenkohlenwasserstoffe, wie Chloroform, Tetrachlorkohlenstoff, Hexachlorethan, Dichlorethan, Tetrachlorethan, Chlorbenzol sowie flüssige C1- bzw. C2-Fluorchlorkohlenwasserstoffe, aliphatische C2- bis C5-Nitrile, wie Acetonitril, Propionitril, Butyronitril oder Valeronitril, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, Cyclohexanon, lineare oder cyclische aliphatische Ether, wie Diisopropylether, 1,3- oder 1,4-Dioxan, Tetrahydrofuran oder Ethylenglykoldimethylether, Carbonate, wie Diethylcarbonat sowie Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, Buttersäure-n-butylester, Buttersäureisobutylester, Buttersäure-tert.-butylester, Buttersäureamylester, Valeriansäuremethylester, Valeriansäureethylester, Valeriansäure-n-propylester, Valeriansäureisopropylester, Valeriansäure-n-butylester, Valeriansäureisobutylester, Valeriansäure-tert.-butylester, Valeriansäureamylester, Benzoesäuremethylester oder Benzoesäureethylester sowie Lactone, wie Butyrolacton, Valerolacton oder Caprolacton.

Erfindungsgemäß können die Lösemittel L) im Reaktionsgemisch sowohl in gelöster (d.h. homogener) als auch in emulgierter (d.h. inhomogener) Form vorliegen. Vorzugsweise werden jedoch solche Lösemittel L) ausgewählt, in welchen sich die jeweils eingesetzten Radikalinitiatoren gut lösen. Insbesondere werden solche Lösemittel L) eingesetzt, in denen sich neben den Radikalinitiatoren auch die Pfropfmonomeren A) gut lösen. Insbesondere vorteilhaft werden solche Lösemittel L) ausgewählt, in denen sich neben den Radikalinitiatoren und den Pfropfmonomeren A) auch noch die Polyalkylenoxide B) zu lösen vermögen. Vorteilhaft werden jedoch auch solche Lösemittel L) ausgewählt, in denen sich neben den Radikalinitiatoren und den Pfropfmonomeren A) auch noch die Polyalkylenoxide B) sowie die daraus gebildeten Pfropfpolymerisate lösen, bzw. die sich selbst in den Komponenten A) und B) sowie den gebildeten Pfropfpolymerisaten, d.h. dem erhaltenen Reaktionsgemisch zu lösen vermögen. Insbesondere bevorzugt werden solche Lösemittel L) ausgewählt, welche sich zusätzlich in einfacher Weise, beispielsweise durch Destillation, Inertgasstrippung und/oder Wasserdampfdestillation aus dem erhaltenen Pfropfpolymerisat-Gemisch abtrennen lassen. Bevorzugte Beispiele hierfür sind Ester aus aliphatischen C1- bis C5-Carbonsäuren oder aromatischen Carbonsäuren mit aliphatischen C1- bis C5-Alkoholen, wie Ameisensäureethylester, Ameisensäure-n-propylester, Ameisensäureisopropylester, Ameisensäure-n-butylester, Ameisensäureisobutylester, Ameisensäure-tert.-butylester, Ameisensäureamylester, Essigsäuremethylester, Essigsäureethylester, Essigsäure-n-propylester, Essigsäureisopropylester, Essigsäure-n-butylester, Essigsäureisobutylester, Essigsäure-tert.-butylester, Essigsäureamylester, Propionsäuremethylester, Propionsäureethylester, Propionsäure-n-propylester, Propionsäureisopropylester, Propionsäure-n-butylester, Propionsäureisobutylester, Propionsäure-tert.-butylester, Propionsäureamylester, Buttersäuremethylester, Buttersäureethylester, Buttersäure-n-propylester, Buttersäureisopropylester, lineare oder cyclische aliphatische Ether, wie Diisopropylether, 1,3- oder 1,4-Dioxan, Tetrahydrofuran oder Ethylenglykoldimethylether, Methylglycolacetat, Diethylcarbonat, lineare oder cyclische aliphatische C3- bis C7-Ketone, wie Aceton, Methylethylketon, Methylisobutylketon, 2- bzw. 3-Hexanon, 2-, 3- bzw. 4-Heptanon, Cyclopentanon, oder Cyclohexanon. Besonders bevorzugte Lösemittel sind die genannten Ester aus aliphatischen C1- bis C5-Carbonsäuren oder aromatischen Carbonsäuren mit aliphatischen C1- bis C5-Alkoholen, insbesondere jedoch Essigsäureethylester und Buttersäureethylester. Günstig ist es, wenn das Lösemittel L) bei Atmosphärendruck (1 atm = 1,013 bar) einen Siedepunkt ≤ 140 °C, häufig ≤ 125°C und insbesondere ≤ 100 °C aufweist.

Selbstverständlich kann auch eine Mischung mehrerer Lösemittel L) eingesetzt werden.

Die Gesamtmenge an organischem Lösemittel L) beträgt ≥ 2 Gew.-% oder ≥ 5 Gew.-%, bevorzugt ≥ 10 Gew.-% und insbesondere bevorzugt ≥ 15 Gew.-%, bezogen auf die Summe der Gesamtmengen an Pfropfmonomeren A) und Polyalkylenoxid B). Als vorteilhaft hat es sich erwiesen, wenn die Gesamtmenge an organischem Lösemittel L), bezogen auf die Summe der Gesamtmengen an Pfropfmonomeren A) und Polyalkylenoxid B), einen Anteil von 50 Gew.-%, insbesondere von 35 Gew.-% nicht überschreitet. Bezogen auf die Summe der Gesamtmengen an Pfropfmonomeren A) und Polyalkylenoxid B), beträgt die Menge an Lösungsmittel bevorzugt ≥ 10 und ≤ 35 Gew.-%.

Bevorzugt werden Art und Menge des Lösemittels L) derart gewählt, dass diese wenigstens mit der Gesamtmenge des Radikalinitiators, bevorzugt zusätzlich auch mit den im Polymerisationsgemisch enthaltenen Pfropfmonomeren A) bei Raumtemperatur (20 bis 25 °C) eine homogene Phase auszubilden vermag.

Zur Herstellung der Pfropfpolymerisate werden die Pfropfmonomeren A) in Gegenwart von Polyalkylenoxiden B) bevorzugt radikalisch polymerisiert. Hierzu werden insbesondere Radikalinitiatoren eingesetzt.

Als Radikalinitiatoren (radikalbildende Initiatoren) sind vorzugsweise alle diejenigen Verbindungen geeignet, die bei der jeweils gewählten Polymerisationstemperatur eine Halbwertszeit von 4 Stunden oder weniger aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Radikalinitiatoren zu arbeiten, nämlich zunächst einen bereits bei niedrigerer Temperatur zerfallenden Radikalinitiator für den Start der Polymerisation einzusetzen und dann die Hauptpolymerisation mit einem Radikalinitiator zu Ende zu führen, der bei höherer Temperatur zerfällt. Man kann prinzipiell wasserlösliche und öllösliche Radikalinitiatoren oder Mischungen von wasserlöslichen und öllöslichen Radikalinitiatoren einsetzen.

Dabei werden als wasserlösliche Radikalinitiatoren in der Regel alle diejenigen Radikalinitiatoren verstanden, welche üblicherweise bei der radikalisch initiierten wässrigen Emulsionspolymerisation eingesetzt werden, während als öllösliche Radikalinitiatoren alle diejenigen Radikalinitiatoren verstanden werden, welche der Fachmann üblicherweise bei der radikalisch initiierten Lösungspolymerisation einsetzt. Im Rahmen dieser Schrift sollen als wasserlösliche Radikalinitiatoren alle diejenigen Radikalinitiatoren verstanden werden, die bei 20°C und Atmosphärendruck in entionisiertem Wasser eine Löslichkeit ≥ 1 Gew.-% aufweisen, während unter öllöslichen Radikalinitiatoren alle diejenigen Radikalinitiatoren verstanden werden, die unter vorgenannten Bedingungen eine Löslichkeit ≤ 1 Gew.-% aufweisen. Häufig weisen wasserlösliche Radikalinitiatoren unter vorgenannten Bedingungen eine Wasserlöslichkeit ≥ 2 Gew.-%, ≥ 5 Gew.-%, oder ≥ 10 Gew.-%, während öllösliche Radikalinitiatoren häufig eine Wasserlöslichkeit ≤ 0,9 Gew.-%, ≤ 0,8 Gew.-%, ≤ 0,7 Gew.-%, ≤ 0,6 Gew.-%, ≤ 0,5 Gew.-%, ≤ 0,4 Gew.-%, ≤ 0,3 Gew.-%, ≤ 0,2 Gew.-% oder ≤ 0,1 Gew.-% aufweisen.

Bei den wasserlöslichen Radikalinitiatoren kann sich dabei beispielsweise sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Menthyl- oder Cumylhydroperoxid eingesetzt werden. Als Azoverbindung findet im wesentlichen 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatischer Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden.

Als öllösliche Radikalinitiatoren seien beispielhaft genannt Dialkyl- bzw. Diarylperoxide, wie Di-tert.-amylperoxid, Dicumylperoxid, Bis(tert.-butylperoxiisopropyl)benzol, 2,5-Bis(tert.-butylperoxi)-2,5-dimethylhexan, tert.-Butylcumolperoxid, 2,5-Bis(tert.-butylperoxl)-2,5-dimethyl-3-hexen, 1,1-Bis(tert.-butylperoxi)-3,3,5-trimethylcyclohexan, 1,1-Bis(tert.-butylperoxi)cyclohexan, 2,2-Bis(tert.-butylperoxi)butan oder Di-tert.-butylperoxid, aliphatische und aromatische Peroxiester, wie Cumylperoxineodecanoat, 2,4,4-Trimethylpentyl-2-peroxineodecanoat, tert.-Amylperoxineodecanoat, tert.-Butylperoxineodecanoat, tert.-Amylperoxipivalat, tert.-Butylperoxipivalat, tert.-Amylperoxi-2-ethylhexanoat, tert.-Butylperoxi-2-ethylhexanoat, tert.-Butylperoxidiethylacetat, 1,4-Bis(tert.-butylperoxi)cyclohexan, tert.-Butylperoxiisobutanoat, tert.-Butylperoxi-3,5,5-trimethylhexanoat, tert.-Butylperoxiacetat, tert.-Amylperoxibenzoat oder tert.-Butylperoxibenzoat, Dialkanoyl- bzw. Dibenzoylperoxide, wie Diisobutanoylperoxid, Bis(3,5,5-trimethylhexanoyl)peroxid, Dilauroylperoxid, Didecanoylperoxid, 2,5-Bis(2-ethylhexanoylperoxi)-2,5-dimethylhexan oder Dibenzoylperoxid, sowie Peroxicarbonate, wie Bis(4-tert.-butylcyclohexyl)peroxidicarbonat, Bis(2-ethylhexyl)peroxidicarbonat, Di-tert.-butylperoxidicarbonat, Diacetylperoxidicarbonat, Dimyristylperoxidicarbonat, tert.-Butylperoxiisopropylcarbonat oder tert.-Butylperoxi-2-ethylhexylcarbonat. Als gut öllösliche Azoinitiatoren finden beispielsweise 2,2'-Azobis(isobutyronitril), 2,2'-Azobis(2,4-dimethylvaleronitril) oder 4,4'-Azobis(4-cyanopentansäure) Verwendung.

Bevorzugt wird als öllöslicher Radikalinitiator eine Verbindung ausgewählt aus der Gruppe umfassend tert.-Butylperoxi-2-ethylhexanoat (Trigonox^{®} 21; Trigonox^{®} Marke der Fa. Akzo Nobel), tert.-Amylperoxi-2-ethylhexanoat (Trigonox^{®} 121), tert.-Butylperoxibenzoat (Trigonox^{®} C), tert.-Amylperoxibenzoat, tert.-Butylperoxiacetat (Trigonox^{®} F), tert.-Butylperoxi-3,5,5-trimethylhexanoat (Trigonox^{®} 42 S), tert.-Butylperoxiisobutanoat, tert.-Butylperoxidiethylacetat (Trigonox^{®} 27), tert.-Butylperoxipivalat (Trigonox^{®} 25), tert.-Butylperoxiisopropylcarbonat, (Trigonox^{®} BPIC), 2,5-Dimethyl-2,5-di(tert.-butylperoxi)hexan (Trigonox^{®} 101), Di-tert.-butylperoxid (Trigonox^{®} B), Cumylhydroperoxid (Trigonox^{®} K) und tert.-Butylperoxi-2-ethylhexylcarbonat (Trigonox^{®} 117) eingesetzt. Selbstverständlich ist es auch möglich, Gemische vorgenannter öllöslicher Radikalinitiatoren einzusetzen.

Erfindungsgemäß werden bevorzugt öllösliche Radikalinitiatoren eingesetzt.

Verwendet man zusätzlich zu den genannten Radikalinitiatoren noch Salze oder Komplexe von Schwermetallen, z.B. Kupfer-, Kobalt-, Mangan-, Eisen-, Vanadium-, Nickel- und Chromsalze, oder organische Verbindungen, wie Benzoin, Dimethylanilin oder Ascorbinsäure, so können die Halbwertszeiten der angegebenen Radikalinitiatoren deutlich verringert werden.

Bezogen auf die Gesamtmenge der bei der Polymerisation eingesetzten Monomeren a) bis c), verwendet man in der Regel 0,01 bis 10 Gew.-%, vorzugsweise 0,02 bis 5 Gew.-% eines Radikalinitiators oder einer Mischung mehrerer Radikalinitiatoren. Die genannten Schwermetalle werden im Bereich von 0,1 bis 100 parts per million (ppm), vorzugsweise 0,5 bis 10 ppm, bezogen auf die Gesamtmenge der eingesetzten Monomeren a) bis c), eingesetzt.

Die Pfropfpolymerisation der Pfropfmonomeren A) kann aber auch durch Einwirkung von energiereicher Strahlung, wie beispielsweise ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen, wie Benzoin und Benzoinether, α-Methylbenzoin oder α-Phenylbenzoin. Auch sogenannte Triplett-Sensibilisatoren, wie Benzyldiketale, können verwendet werden. Als UV-Strahlungsquellen dienen beispielsweise neben energiereichen UV-Lampen, wie Kohlenbogenlampen, Quecksilberdampflampen oder Xenonlampen.

Gegebenenfalls kann es zweckmäßig sein, dass die radikalische Polymerisation in Gegenwart von Radikalkettenreglern durchgeführt wird. Geeignete Radikalkettenregler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Weitere Radikalkettenregler sind dem Fachmann geläufig. Falls die Polymerisation in Gegenwart von Radikalkettenreglern durchgeführt wird, werden häufig 0,01 bis 10 Gew.-%, bezogen auf die Gesamtmenge der Pfropfmonomeren a) bis c), verwendet. Erfindungsgemäß vorteilhaft werden jedoch keine Radikalkettenregler eingesetzt.

Die radikalisch initiierte Polymerisation erfolgt - abhängig vom verwendeten Radikalinitiator - üblicherweise bei Temperaturen im Bereich von 40 bis 180 °C, vorzugsweise von 50 bis 150 °C und insbesondere von 60 bis 110 °C. Sobald die Temperatur bei der Polymerisationsreaktion oberhalb des Siedepunktes des organischen Lösemittels L) und/oder der Pfropfmonomeren A) liegt, wird die Polymerisation vorteilhaft unter Druck durchgeführt. Erfolgt die Polymerisation unter Einwirkung energiereicher Strahlung, so kann die Polymerisationsreaktion auch bei tieferen Temperaturen, beispielsweise ≤ 40 °C, ≤ 20 °C oder ≤ 10 °C erfolgen.

Die Herstellung der Pfropfpolymerisate kann in den üblichen Polymerisationsvorrichtungen erfolgen. Hierzu verwendet man beispielsweise Glaskolben (Labor) oder Rührkessel (technischer Maßstab), die mit einem Anker-, Blatt-, Impeller-, Kreuzbalken-, MIG- oder Mehrstufenimpulsgegenstromrührer ausgestattet sind. Insbesondere bei der Polymerisation in Anwesenheit lediglich kleiner Mengen an Lösemittel L) kann es auch vorteilhaft sein, die Polymerisation in üblichen ein- oder zweiwelligen (gleich- oder gegenläufig) Kneterreaktoren, wie beispielsweise solchen der Fa. List oder Buss SMS durchzuführen.

Wesentlich für das erfindungsgemäße Verfahren ist, dass im Verfahrensschritt i) ≥ 50 Gew.-%, ≥ 80 Gew.-%, bevorzugt ≥ 90 Gew.-% der Gesamtmenge und insbesondere bevorzugt die Gesamtmenge an Polyalkylenoxid B) und ≤ 10 Gew.-%, ≤ 5 Gew.-% der Gesamtmenge an Pfropfmonomeren A) in einem Reaktionsgefäß vorgelegt werden. Insbesondere bevorzugt werden keine Pfopfmonomeren A) im Polymerisationsgefäß vorgelegt. Auch ist es möglich, Teil- oder Gesamtmengen an Radikalinitiatoren, gegebenenfalls UV-Initiatoren, Schwermetallverbindungen, Radikalkettenregler, Lösemittel L) oder sonstige übliche Hilfsstoffe im Reaktionsgefäß vorzulegen. Mit Vorteil wird das Reaktionsgefäß mit einem Inertgas, beispielsweise Stickstoff, Kohlenstoffdioxid oder Argon, inertisiert und die anschließende Pfropfpolymerisation unter Inertgasatmosphäre durchgeführt. Bei der Inertisierung werden Sauerstoffkonzentrationen von ≤ 5 Vol.-%, bevorzugt ≤ 1 Vol.-% und insbesondere bevorzugt ≤ 0,1 Vol.-% eingestellt. Daran anschließend werden die für die folgende Pfropfpolymerisation erforderlichen Polymerisationsbedingungen, wie Temperatur, Druck etc. eingestellt bzw. mit der Einstrahlung energiereicher Strahlung begonnen. Unter welchen Bedingungen die Polymerisation gestartet bzw. aufrecht erhalten werden kann, weiß der Fachmann oder kann von diesem in wenigen Vorversuchen ermittelt werden; sie sind insbesondere abhängig von der Art der eingesetzten Pfropfmonomeren A), Polyalkylenoxiden B), Radikalinitiatoren bzw. der energiereichen Strahlung.

Nachdem die erforderlichen Polymerisationsbedingungen eingestellt wurden, werden im Verfahrensschritt ii) die gegebenenfalls verbliebene Restmenge von an Polyalkylenoxid B) sowie die gegebenenfalls verbliebene Restmenge von ≥ 90 Gew.-%, bevorzugt jedoch die Gesamtmenge an Pfropfmonomeren A) unter Polymerisationsbedingungen dem Reaktionsgefäß zudosiert. Im Verfahrensschritt ii) werden aber auch die gegebenenfalls verbliebenen Restmengen bzw. die Gesamtmengen an Radikalinitiatoren, gegebenenfalls UV-Initiatoren, Schwermetallverbindungen, Radikalkettenregler, Lösemittel L) oder sonstigen üblichen Hilfsstoffe in das Reaktionsgefäß zudosiert. Bevorzugt wird dabei das Lösemittel L) im Gemisch mit den Pfropfmonomeren A) und/oder mit den Radikalinitiatoren zudosiert. Die Dosierzeiten der Komponenten liegen üblicherweise in einem Bereich ≥ 10 Minuten und ≤ 10 Stunden und sind insbesondere abhängig von der Ansatzgröße, der Polymerisationstemperatur und den gewählten Komponenten. Dabei wird in der Regel so vorgegangen, dass die Pfropfmonomeren A) nach Maßgabe ihres Verbrauchs zudosiert werden, d.h. dass die Pfropfmonomerenmenge immer groß genug ist, damit die Polymerisationsreaktion nicht unterbrochen wird und andererseits die Pfropfmonomerenmenge im Reaktionsgefäß aber nicht zu groß ist, um eine unkontrollierte Polymerisationsreaktion (Durchgehreaktion) zu vermeiden.

Insbesondere vorteilhaft werden die Polymerisationsbedingungen so gewählt, dass zu jedem Zeitpunkt ≥ 10 % der Gesamtdosierzeit der Monomeren a), der Gehalt der Monomeren a) im Polymerisationsgemisch ≤ 1 Gew.-%, bevorzugt ≤ 0,5 Gew.-% und insbesondere bevorzugt ≤ 0,3 Gew.-% beträgt.

Von Bedeutung ist, dass die Hauptmengen, d.h. ≥ 50 Gew.-%, bevorzugt ≥ 60 Gew.-% und insbesondere bevorzugt ≥ 70 Gew.-% der Gesamtmengen an Monomeren a) und Monomeren b) im Verfahrensschritt ii) parallel zudosiert werden. Dabei kann die Dosierung der Monomeren a) und der Monomeren b) diskontinuierlich in mehreren Portionen sowie kontinuierlich mit gleichbleibenden oder sich verändernden Mengenströmen erfolgen. Vorteilhaft erfolgt die Dosierung der Monomeren a) und b) kontinuierlich und mit gleichbleibenden Mengenströmen. In einer bevorzugten Ausführungsform kann die Dosierung der Monomeren a) und b) gleichzeitig beginnen. Es ist aber auch möglich, dass die Dosierung der Monomeren a) vor der Dosierung der Monomeren b) gestartet wird. Ebenso ist es aber auch möglich, die Dosierung der Monomeren b) vor der Dosierung der Monomeren a) gestartet wird. Die Dosierung der optional verwendeten Monomeren c) ist unkritisch und kann prinzipiell vor, während oder nach der Dosierung der Hauptmengen an Monomeren a) und Monomeren b) erfolgen.

Vorteilhaft erfolgt die Dosierung der Monomeren a) und b) im Verfahrensschritt ii) dergestalt, dass die Dosierung der Monomeren a) und b) gleichzeitig beginnt, die Dosierung der Monomeren a) und b) kontinuierlich und mit gleichbleibenden Mengenströmen erfolgt und die Dosierzeit der Monomeren b) größer oder gleich der Dosierzeit der Monomeren a) ist. Ebenso vorteilhaft ist dabei die Dosierzeit der Monomeren b) größer als die Dosierzeit der Monomeren a), wobei das Verhältnis der Dosierzeiten der Monomeren b) zu den Dosierzeiten der Monomeren a) ≥ 1,1, bevorzugt ≥ 1,3 oder ≥ 1,5 aber < 2,0 ist.

Verfahrenswesentlich ist, dass der Wassergehalt des im Reaktionsgefäß vorliegenden Polymerisationsgemisches während der Polymerisation zu jedem Zeitpunkt ≤ 2 Gew.-%, bevorzugt ≤ 1 Gew.-% und insbesondere bevorzugt ≤ 0,5 Gew.-%, bezogen auf die Summe der dem Reaktionsgefäß zum jeweiligen Zeitpunkt zudosierten Gesamtmengen an Pfropfmonomeren A) und Polyalkylenoxid B), ist. Dies wird u.a. sichergestellt, indem die verwendeten Einsatzstoffe einen Wassergehalt ≤ 2 Gew.-%, bevorzugt ≤ 1 Gew.-% und insbesondere bevorzugt ≤ 0,5 Gew.-% aufweisen und keine Einsatzstoffe eingesetzt werden, welche unter Polymerisationsbedingungen Wasser abspalten können.

Zur Vervollständigung der Polymerisationsreaktion und zur Minimierung der nicht umgesetzten Pfropfmonomeren A), lässt man in der Regel das Polymerisationsgemisch auch nach Ende der Dosierung der Pfropfmonomeren A) unter Polymerisationsbedingungen nachreagieren. Dabei kann es von Vorteil sein, weiteren Radikalinitiator oder UV-Initiator nachzudosieren.

Da das Polymerisationsgemisch nach Abschluss der Polymerisationsreaktion in Abhängigkeit von der Menge des verwendeten Lösemittels L) häufig sehr hochviskos ist, kann diesem zur Viskositätsabsenkung 10 bis 100 Gew.-%, bezogen auf das Polymerisationsgemisch, Wasser, ein ein-, zwei- oder mehrwertiger Alkohol und/oder ein entsprechender Monoalkoxyalkohol, zugesetzt werden. Die Alkohole und/oder die Monoalkoxyalkohole weisen bei der Inhibierung von Gashydraten häufig eine synergistische Wirkung auf.

Als ein-, zwei- oder mehrwertige Alkohole kommen insbesondere die C1- bis C8-Alkohole, die C2- bis C8-Alkandiole sowie C3- bis C10-Tri- oder Polyole in Betracht. Beispiele hierfür sind Methanol, Ethanol, n-Propanol, iso-Propanol, n-Butanol, sec.-Butanol, tert.-Butanol, n-Pentanol, 2-Pentanol, 3-Pentanol, n-Hexanol, 2-Hexanol, 3-Hexanol, 4-Hexanol, n-Heptanol, n-Octanol, 2-Ethylhexanol 3-Ethylhexanol oder 4-Ethylhexanol sowie Ethylenglykol, Propylenglykol, 1,3-Propandiol, 1,2-Butandiol, 1,3-Butandiol, 1,4-Butandiol, 1,6-Hexandiol oder 1,4-Dimethylbutandiol-1,4.

Als Monoalkoxyalkohole finden insbesondere die vorgenannten C1- bis C8-Alkohole und C2- bis C8-Alkandiole sowie C3- bis C10-Triole, substituiert mit einer C1- bis C6-Alkoxygruppe Verwendung. Beispiele hierfür sind Methoxymethanol, 2-Methoxyethanol, 2-Methoxypropanol, 3-Methoxypropanol, 2-Methoxybutanol, 3-Methoxybutanol, 4-Methoxybutanol, 2-Ethoxyethanol, 2-Ethoxypropanol, 3-Ethoxypropanol , 2-Ethoxybutanol, 3-Ethoxybutanol, 4-Ethoxybutanol, 2-Isopropoxyethanol, 2-Isopropoxypropanol, 3-Isopropoxypropanol , 2-Isopropoxybutanol, 3-Isopropoxybutanol, 4-Isopropoxybutanol, 2-(n-Propoxy)ethanol, 2-(n-Propoxy)propanol, 3-(n-Propoxy)propanol, 2-(n-Propoxy)butanol, 3-(n-Propoxy)butanol, 4-(n-Propoxy)butanol, 2-(n-Butoxy)ethanol, 2-(n-Butoxy)propanol, 3-(n-Butoxy)propanol, 2-(n-Butoxy)butanol, 3-(n-Butoxy)butanol, 4-(n-Butoxy)butanol, 2-(sec.-Butoxy)ethanol, 2-(sec.-Butoxy)propanol, 3-(sec.-Butoxy)propanol, 2-(sec.-Butoxy)butanol, 3-(sec.-Butoxy)butanol, 4-(sec.-Butoxy)butanol, 2-(tert.-Butoxy)ethanol, 2-(tert.-Butoxy)propanol, 3-(tert.-Butoxy)propanol, 2-(tert.-Butoxy)butanol, 3-(tert.-Butoxy)butanol, 4-(tert.-Butoxy)butanol, (n-Hexoxy)methanol, 2-(n-Hexoxy)ethanol, 2-(n-Hexoxy)propanol, 3-(n-Hexoxy)propanol, 2-(n-Hexoxy)butanol, 3-(n-Hexoxy)butanol oder 4-(n-Hexoxy)butanol.

In der Regel ist es vorteilhaft, dass das organische Lösemittel L) vor, während und/oder nach Zugabe von Wasser, Alkohol und/oder Monoalkoxyalkohol durch Destillation, Inertgas- oder Wasserdampfstrippung abgetrennt wird. Die entsprechenden Verfahren hierzu sind dem Fachmann geläufig. Dabei werden in der Regel die entsprechenden Pfropfpolymerisat-Lösungen erhalten. Diese weisen häufig Pfropfpolymerisat-Gehalte im Bereich von 30 bis 90 Gew.-% oder 40 bis 70 Gew.-%. auf. Häufig wird der Austausch des Lösemittels L) gegen Wasser, Alkohol oder Monoalkoxyalkohol bis zu einem Lösemittel L)-Restgehalt ≤ 10000 ppm, ≤ 5000 ppm oder sogar ≤ 1000 ppm durchgeführt.

Die nach dem erfindungsgemäßen Verfahren zugänglichen Pfropfpolymerisate sind - insbesondere in Form ihrer stabilen wässrigen Lösungen - farblose bis leicht gelbliche klare Flüssigkeiten und weisen in der Regel - bei gleichem Pfropfpolymerisat-Gehalt - eine deutlich geringere Viskosität auf, als die entsprechenden, nach dem Stand der Technik hergestellten Produkte. Vorteilhaft eignen sich die erfindungsgemäßen Pfropfpolymerisate, insbesondere in Form ihrer Lösungen mit Alkoholen bzw. Monoalkoxyalkoholen, zur Inhibierung von Gashydraten und weisen in der Regel eine bessere Inhibierungswirkung als die entsprechenden, nach dem Stand der Technik hergestellten Pfropfpolymerisate auf. Auch zeigen die nach dem erfindungsgemäßen Verfahren zugänglichen Pfropfpolymerisate gute Bioabbaubarkeiten gemäß OECD 301 A (DOC Die-Away-Test).

Die folgenden, nicht einschränkenden Beispiele sollen die Erfindung erläutern.

### Beispiele

Die K-Werte der Pfropfpolymerisate wurden nach H. Fikentscher, Cellulosechemie, Band 13, Seiten 58 bis 64 und 71 bis 74 (1932) in Wasser bei einer Temperatur von 23 °C und einer Polymerkonzentration von 5 Gew.-% gemessen.

Die Bestimmung der Viskositäten erfolgte mit einem Brookfield-Viskosimeter "Brookfield LV-DV II+", Spindel 4, 60 UPM; Temperatur: 23°C; Konzentration des Polymers (Festgehalt) wie in Beispielen angegeben. Einheit: [mPa*s].

Die Restgehalte an N-Vinylcaprolactam wurden generell mittels Gaschromatographie bestimmt (Gerät: Hewlett Packard HP 5890, Säule: Chrompack CP-WAX 52 CB, Detektor: Flammenionisationsdetektor).

### Herstellung der Pfropfpolymerisate

Das verwendete Polyethylenglykol hatte ein zahlenmittleres Molekulargewicht von ca. 6000 g/mol. Es wurde Pluriol^{®} E 6000 der Fa. BASF AG verwendet.

Generell wurde entionisiertes Wasser eingesetzt.

### Pfropfpolymerisat P1

In einem Polymerisationsdruckgefäß wurden unter Stickstoffatmosphäre 300 g Polyethylenglykol und 25 g Essigsäureethylester vorgelegt und auf 80 °C erhitzt, bis alles Polyethylenglykol geschmolzen war. Anschließend wurden unter Rühren 24 mg tert.-Butylperoxy-2-ethylhexanoat, gelöst in 0,42 g Essigsäureethylester zugegeben und das erhaltene Gemisch 5 Minuten gerührt. Folgende Zuläufe wurden dem Polymerisationsgefäß bei 80 °C Innentemperatur, zeitgleich beginnend unter Rühren kontinuierlich mit gleichbleibenden Mengenströmen zudosiert:
- Zulauf I:: Monomerengemisch, bestehend aus 50 g Vinylacetat und 150 g N- Vinylcaprolactam, innerhalb von 6 Stunden sowie
- Zulauf II:: 3,25 g tert.-Butylperoxy-2-ethylhexanoat, gelöst in 62 g Essigsäureethyles- ter, innerhalb von 6,5 Stunden.

Nach Ende von Zulauf II wurde 1 g tert.-Butylperoxy-2-ethylhexanoat, gelöst in 10 g Essigsäureethylester, zugegeben und 1 Stunde bei 80 °C nachpolymerisiert. Während der Polymerisation stieg der Innendruck langsam auf ca. 1,5 bar (Überdruck) an. Im Anschluss daran wurde der Essigsäureethylester durch Destillation (Temperatur: 80 bis 92°C, Druck: Atmosphärendruck, Zeit: ca. 1 Stunde) entfernt. Restmengen Essigsäureethylester wurden durch Wasserdampfdestillation entfernt (Temperatur: 92 bis > 100°C Innentemperatur, Druck des Wasserdampfes: 5 bar, Zeit: ca. 1 Stunde; Destillatmenge: ca. 1000 ml). Anschließend wurde mit entionisiertem Wasser ein Feststoffgehalt von 47,8 Gew.-% eingestellt. Die erhaltene Lösung war leicht gelblich und wasserklar. Sie wies eine Viskosität von 2100 mPas auf. Die Viskosität einer 40 gew.-%igen wässrigen Lösung betrug 370 mPas. Der K-Wert des Pfropfpolymerisates betrug 26,4. Der Restgehalt an N-Vinylcaprolactam betrug < 50 ppm.

### Pfropfpolymerisat P2

In einem Polymerisationsgefäß mit Rückflusskühler wurden unter Stickstoffatmosphäre bei Atmosphärendruck 300 g Polyethylenglykol vorgelegt und auf 80 °C erhitzt, bis alles Polyethylenglykol geschmolzen war. Anschließend wurden unter Rühren 70 mg tert.-Butylperoxy-2-ethylhexanoat, gelöst in 0,93 g Essigsäureethylester zugegeben und das erhaltene Gemisch 5 Minuten gerührt. Folgende Zuläufe wurden dem Polymerisationsgefäß bei 80 °C Innentemperatur, zeitgleich beginnend unter Rühren kontinuierlich mit gleichbleibenden Mengenströmen zudosiert:
- Zulauf I:: Monomerengemisch, bestehend aus 50 g Vinylacetat, 150 g N- Vinylcaprolactam und 15 g Essigsäureethylester, innerhalb von 6 Stunden .
- Zulauf II:: 3,18 g tert.-Butylperoxy-2-ethylhexanoat, gelöst in 43,1 g Essigsäureethyl- ester, innerhalb von 6,5 Stunden.

Nach Ende von Zulauf 11 wurden 2 g tert.-Butylperoxy-2-ethylhexanoat, gelöst in 20 g Essigsäureethylester, zugegeben und 1 Stunde bei 80 °C nachpolymerisiert. Im Anschluss daran wurde der Essigsäureethylester durch Destillation (Temperatur: 80 bis 92 °C, Druck: Atmosphärendruck, Zeit: ca. 1 Stunde) entfernt. Restmengen Essigsäureethylester wurden durch Wasserdampfdestillation entfernt (Temperatur: 92 bis > 100 °C Innentemperatur, Druck des Wasserdampfes: 5 bar, Zeit: ca. 1 Stunde; Destillatmenge: ca. 1000 ml). Anschließend wurde mit entionisiertem Wasser ein Feststoffgehalt von 48,1 Gew.-% eingestellt. Die erhaltene Lösung war leicht gelblich und wasserklar. Sie wies eine Viskosität von 2150 mPas auf. Die Viskosität einer 40 gew.-%igen wässrigen Lösung betrug 380 mPas. Der K-Wert des Pfropfpolymerisates betrug 26,1. Der Restgehalt an N-Vinylcaprolactam betrug < 50 ppm.

### Pfropfpolymerisat V1 (Vergleichsbeispiel 1)

In einem Polymerisationsgefäß mit Rückflusskühler wurden unter Stickstoffatmosphäre bei Atmosphärendruck 300 g Polyethylenglykol vorgelegt und auf 80°C erhitzt, bis alles Polyethylenglykol geschmolzen war. Anschließend wurden unter Rühren 70 mg tert.-Butylperoxy-2-ethylhexanoat, gelöst in 0,93 g Essigsäureethylester zugegeben und das erhaltene Gemisch 5 Minuten gerührt. Folgende Zuläufe wurden dem Polymerisationsgefäß bei 80 °C Innentemperatur, zeitgleich beginnend unter Rühren kontinuierlich mit gleichbleibenden Mengenströmen zudosiert:
- Zulauf I:: Monomerengemisch, bestehend aus 50 g Vinylacetat, 150 g N- Vinylcaprolactam und 15 g Essigsäureethylester, innerhalb von 6 Stunden,
- Zulauf II:: 167 g entionisiertes Wasser, innerhalb von 6 Stunden und
- Zulauf III:: 3,18 g tert.-Butylperoxy-2-ethylhexanoat, gelöst in 43,1 g Essigsäureethyl- ester, innerhalb von 6,5 Stunden.

Nach Ende von Zulauf III wurde 2 g tert.-Butylperoxy-2-ethylhexanoat, gelöst in 20 g Essigsäureethylester zugegeben und 1 Stunde bei 80°C nachpolymerisiert. Im Anschluss daran wurde der Essigsäureethylester durch Destillation (Temperatur: 80 bis 92 °C, Druck: Atmosphärendruck, Zeit: ca. 1 Stunde) entfernt. Restmengen Essigsäureethylester wurden durch Wasserdampfdestillation entfernt (Temperatur: 92 bis > 100 °C Innentemperatur, Druck des Wasserdampfes: 5 bar, Zeit: ca. 1 Stunde; Destillatmenge: ca. 1000 ml). Anschließend wurde mit entionisiertem Wasser ein Feststoffgehalt von 43,7 Gew.-% eingestellt. Die erhaltene Lösung war milchig weiß. Sie wies eine Viskosität von 8800 mPas auf. Die Viskosität einer 40 gew.-%igen wässrigen Lösung betrug 5350 mPas. Der K-Wert des Pfropfpolymerisates betrug 26,3. Der Restgehalt an N-Vinylcaprolactam betrug < 50 ppm.

### Pfropfpolymerisat V2 (Vergleichsbeispiel 2)

In einem Polymerisationsgefäß mit Rückflusskühler wurden unter Stickstoffatmosphäre bei Atmosphärendruck 300 g Polyethylenglykol vorgelegt und auf 80 °C erhitzt, bis alles Polyethylenglykol geschmolzen war. Anschließend wurden unter Rühren 70 mg tert.-Butylperoxy-2-ethylhexanoat, gelöst in 0;93 g Essigsäureethylester zugegeben und das erhaltene Gemisch 5 Minuten gerührt. Folgende Zuläufe wurden dem Polymerisationsgefäß bei 80 °C Innentemperatur unter Rühren kontinuierlich mit gleichbleibenden Mengenströmen zudosiert:
- Zulauf I:: 50 g Vinylacetat innerhalb von 1 Stunde
- Zulauf II:: Lösung aus 150 g N-Vinylcaprolactam und 15 g Essigsäureethylester, in- nerhalb von 3 Stunden sowie
- Zulauf III:: 3,18 g tert.-Butylperoxy-2-ethylhexanoat, gelöst in 43,1 g Essigsäureethyl- ester, innerhalb von 4,5 Stunden.

Die Zuläufe I und III wurden gleichzeitig gestartet. Nach Ende von Zulauf I wurde Zulauf II gestartet. Nach Ende von Zulauf III wurde 2 g tert.-Butylperoxy-2-ethylhexanoat, gelöst in 20 g Essigsäureethylester, zugegeben und 1 Stunde bei 80 °C nachpolymerisiert. Im Anschluss daran wurde der Essigsäureethylester durch Destillation (Temperatur: 80 bis 92 °C, Druck: Atmosphärendruck, Zeit: ca. 1 Stunde) entfernt. Restmengen Essigsäureethylester wurden durch Wasserdampfdestillation entfernt (Temperatur: 92 bis > 100 °C Innentemperatur, Druck des Wasserdampfes: 5 bar, Zeit: ca. 1 Stunde; Destillatmenge: ca. 1000 ml). Anschließend wurde mit entionisiertem Wasser ein Feststoffgehalt von 50,0 Gew.-% eingestellt. Die erhaltene Lösung war gelb und trübe (undurchsichtig ab ca. 3 cm Dicke). Sie wies eine Viskosität von 1020 mPas auf. Die Viskosität einer 40 gew.-%igen wässrigen Lösung betrug 230 mPas. Der K-Wert des Pfropfpolymerisates betrug 26,7. Der Restgehalt an N-Vinylcaprolactam betrug < 50 ppm.

### Pfropfpolymerisat V3 (Vergleichsbeispiel 3)

Die Herstellung von Pfropfpolymerisat V3 erfolgte analog der Herstellung von Pfropfpolymerisat V2, mit dem Unterschied, dass der Zulauf II vor Zulauf I dosiert wurde.

Nach der Wasserdampfdestillation wurde mit entionisiertem Wasser ein Feststoffgehalt von 49,3 Gew.-% eingestellt. Die erhaltene Lösung war gelb und trübe (undurchsichtig bei ca. 3 cm Dicke). Sie wies eine Viskosität von 1360 mPas auf. Die Viskosität einer 40 gew.-%igen wässrigen Lösung betrug 290 mPas. Der K-Wert des Pfropfpolymerisates betrug 27,3. Der Restgehalt an N-Vinylcaprolactam betrug < 50 ppm.

### Pfropfpolymerisat V4 (Vergleichsbeispiel 4 gemäß Beispiel 1 der DE 199 35 063 A1)

In einem Polymerisationsgefäß mit Rückflusskühler wurden unter Stickstoffatmosphäre bei Atmosphärendruck 300 g Polyethylenglykol vorgelegt und mittels eines auf 100 °C temperierten Ölbads aufgeheizt, bis alles Polyethylenglykol geschmolzen war. Anschließend wurden 0,4 g tert.-Butylperoxy-2-ethyl,hexanoat in 3 g Methanol zugegeben und 5 Minuten gerührt. Folgende Zuläufe wurden dem Polymerisationsgefäß bei 100 °C Ölbadtemperatur, unter Rühren kontinuierlich mit gleichbleibenden Mengenströmen zudosiert:
- Zulauf I:: Monomerengemisch, bestehend aus 60 g Vinylacetat und 240 g N- Vinylcaprolactam, innerhalb von 5 Stunden
- Zulauf II:: 3,6 g tert.-Butylperoxy-2-ethylhexanoat, gelöst in 27 g Methanol, innerhalb von 5 Stunden.

Die Zuläufe I und II wurden gleichzeitig gestartet. Nach Ende der Zuläufe wurde 3 Stunden nachpolymerisiert. Im Anschluss daran wurde 900 g Wasser in 30 Minuten zugegeben. Der Feststoffgehalt betrug 35,9 Gew.-%. Die erhaltene Lösung war leicht gelblich und sehr trübe (undurchsichtig bei ca. 3 cm Dicke). Sie wies eine Viskosität von 160 mPas auf. Der K-Wert des Pfropfpolymerisates betrug 27,9. Der Restgehalt an N-Vinylcaprolactam betrug 1928 ppm.

### Untersuchungen zur Gashydratinhibierung

Es wurde aus den wässrigen Lösungen der beschriebenen Pfropfpolymerisate P1, P2 sowie V1 bis V4 durch Verdünnen mit entionisiertem Wasser eine verdünnte Lösung hergestellt, die 4500 ppm an Pfropfpolymerisat enthielt. 120 ml einer solchermaßen verdünnten Lösung wurden in einen sauberen und trockenen 300 ml Stahlautoklaven gegeben. Die Lösung wurde während des gesamten Tests mit einem Teflonummantelten Rührfisch bei 500 Umdrehungen pro Minute gerührt (elektronisch kontrollierter Rührmotor). Der Gasraum über der wässrigen Lösung wurde bei Raumtemperatur für ca. 1 Minute mit Mungo-2-Gas gespült (kommerziell erhältlich bei Fa. Praxair GmbH; Zusammensetzung siehe Tabelle 1). Anschließend wurde die Lösung bei Atmosphärendruck unter einer Atmosphäre von Mungo-2-Gas auf 4 °C abgekühlt. Danach wurde Mungo-2-Gas bis zu einem Druck von 30 bar (Überdruck) aufgepresst, 10 Minuten gewartet und der Innendruck - zwecks weitgehender Kompensation eines Druckverlustes, der durch Lösen von Gas in der kalten Lösung unter 30 bar Druck hervorgerufen wird - erneut auf 30 bar eingestellt. Danach wurde der Autoklav vollständig geschlossen und bei gleichbleibender Innentemperatur und konstantem Rühren der Innendruck kontinuierlich gemessen. Dabei wurde als Inhibierungszeit die Zeitspanne gewertet, bei der der Innendruck auf ≤ 29 bar abgesunken war. Die bei den entsprechenden Versuchen erhaltenen Zeitspannen sind in Tabelle 2 angegeben. Je größer diese Zeitspanne ist, desto besser ist die Wirkung des getesteten Pfropfpolymerisats als Gashydratinhibitor.

Um Leckagen am Stahlautoklaven auszuschließen, wurden die Messungen auch nach Unterschreiten der 29 bar so lange weitergeführt, bis der Innendruck wieder über 3 Stunden einen konstanten Wert erreichte. Damit wurde sichergestellt, dass der Autoklav jeweils dicht war und der beobachtete Druckverlust durch Gashydratbildung hervorgerufen wurde. Die Tests wurden nach maximal 288 Stunden abgebrochen.

**Tabelle 1: Zusammensetzung Mungo-2-Gas**

| Komponente | Mol-% | Komponente | Mol-% |
|---|---|---|---|
| Stickstoff | 1,75 | iso-Butan | 0,62 |
| Kohlendioxid | 1,36 | n-Butan | 1,12 |
| Methan | 79,29 | iso-Pentan | 0,2 |
| Ethan | 10,84 | n-Pentan | 0,19 |
| Propan | 4,63 | | |

**Tabelle 2: Testergebnisse der beschriebenen Pfropfpolymerisate**

| Pfropfpolymerisat | Gashydratbildung nach x Stunden |
|---|---|
| P1 | 284 |
| P2 | > 288 |
| V 1 | < 0,5 |
| V 2 | 10 |
| V 3 | 7 |
| V 4 | 31 |

## Patentansprüche

1. Verfahren zur Herstellung von Pfropfpolymerisaten durch Polymerisation von
A) 10 bis 95 Gew.-% Pfropfmonomeren A), enthaltend, bezogen auf die Gesamtmenge der Pfropfmonomeren A)
a) 1 bis 99 Gew.-% wenigstens eines Vinylesters [Monomere a)]
b) 1 bis 99 Gew.-% wenigstens eines N-Vinyllactams [Monomere b)] sowie gegebenenfalls
c) 0 bis 10 Gew.-% wenigstens eines weiteren ethylenisch ungesättigten Mononomeren [Monomere c)], wobei sich die Mengen an Monomeren a) bis c) zu 100 Gew.-% addieren,
in Gegenwart von
B) 5 bis 90 Gew.-% wenigstens eines Polyalkylenoxids B), welches aus mindestens 3 Einheiten eines C2- bis C4-Alkylenoxids aufgebaut ist, wobei sich die Gesamtmengen an Pfropfmonomeren A) und Polyalkylenoxid B) zu 100 Gew.-% addieren,
**dadurch gekennzeichnet, dass**
i) ≥ 50 Gew.-% der Gesamtmenge an Polyalkylenoxid B) und ≤ 10 Gew.-% der Gesamtmenge an Pfropfmonomeren A) in einem Reaktionsgefäß vorgelegt werden, anschließend
ii) die gegebenenfalls verbliebene Restmenge an Polyalkylenoxid B) sowie ≥ 90 Gew.-% der Gesamtmenge an Pfropfmonomeren A) unter Polymerisationsbedingungen dem Reaktionsgefäß zudosiert werden, dabei
iii) die Hauptmengen der Monomeren a) und der Monomeren b) im Verfahrensschritt ii) parallel zudosiert werden,
iv) die Polymerisation in Anwesenheit von ≥ 2 Gew.-%, bezogen auf die Summe der Gesamtmengen an Pfropfmonomeren A) und Polyalkylenoxid B), wenigstens eines aprotischen organischen Lösemittels L) erfolgt, wobei gegebenenfalls eine Teil- oder die Gesamtmenge des Lösemittels L) in Verfahrensschritt i) im Reaktionsgefäß vorgelegt und die Gesamtmenge bzw. die gegebenenfalls verbliebene Restmenge des Lösemittels L) dem Reaktionsgefäß in Verfahrensschritt ii) zudosiert wird, und
v) der Wassergehalt des im Reaktionsgefäß vorliegenden Polymerisationsgemisches während der Polymerisation zu jedem Zeitpunkt ≤ 2 Gew.-%, bezogen auf die Summe der dem Reaktionsgefäß zum jeweiligen Zeitpunkt zudosierten Gesamtmengen an Pfropfmonomeren A) und Polyalkylenoxid B), ist.

2. Verfahren nach Anspruch 1, **dadurch gekennzeichnet, dass** die Polymerisation durch Zugabe von Radikalinitiatoren initiiert wird.

3. Verfahren nach einem der Ansprüche 1 oder 2, **dadurch gekennzeichnet, dass**
20 bis 75 Gew.-% Pfropfmonomere A), enthaltend
a) 10 bis 70 Gew.-% Monomere a) sowie
b) 30 bis 90 Gew.-% Monomere b),
und
25 bis 80 Gew.-% Polyalkylenoxid B)
eingesetzt werden.

4. Verfahren nach einem der Ansprüche 1 bis 3, **dadurch gekennzeichnet, dass** als Monomere a) Vinylacetat, Vinylpropionat, Vinylbutanoat, Vinylhexanoat und/oder Vinyloctanoat und als Monomere b) N-Vinyl-2-pyrrolidon, N-Vinylcaprolactam und/oder N-Vinyl-2-piperidon eingesetzt werden.

5. Verfahren nach einem der Ansprüche 1 bis 4, **dadurch gekennzeichnet, dass** die Zudosierung der Monomeren a) und der Monomeren b) im Verfahrensschritt ii) gleichzeitig beginnt und die Dosierzeit der Monomeren b) größer oder gleich der Dosierzeit der Monomeren a) ist.

6. Verfahren nach einem der Ansprüche 1 bis 5, **dadurch gekennzeichnet, dass** das Polyalkylenoxid B) ein mittleres Molekulargewicht im Bereich ≥ 300 und ≤ 35000 g/mol aufweist.

7. Verfahren nach einem der Ansprüche 1 bis 6, **dadurch gekennzeichnet, dass** das Polyalkylenoxid B) ein Polyethylenglykol ist.

8. Verfahren nach einem der Ansprüche 1 bis 7, **dadurch gekennzeichnet, dass** die Zudosierung in Verfahrensschritt ii) kontinuierlich erfolgt.

9. Verfahren nach einem der Ansprüche 1 bis 8, **dadurch gekennzeichnet, dass** dem Polymerisationsgemisch nach Abschluss der Polymerisationsreaktion Wasser, ein ein-, zwei- oder mehrwertiger Alkohol und/oder ein entsprechender Monoalkoxyalkohol zugesetzt wird.

10. Verfahren nach Anspruch 9, **dadurch gekennzeichnet, dass** das organische Lösemittel L) vor, während und/oder nach Zugabe von Wasser, Alkohol und/oder Monoalkoxyalkohol abgetrennt wird.

11. Pfropfpolymerisat erhältlich nach einem Verfahren gemäß einem der Ansprüche 1 bis 10.

12. Verwendung eines Pfropfpolymerisates nach Anspruch 11 zur Inhibierung von Gashydraten.

## Claims

1. A process for preparing graft polymer by addition-polymerizing
A) 10% to 95% by weight of graft monomers A), comprising, based on the total amount of the graft monomers A),
a) 1% to 99% by weight of at least one vinyl ester [monomers a)],
b) 1% to 99% by weight of at least one N-vinyllactam [monomers b)], and if appropriate
c) 0 to 10% by weight of at least one further ethylenically unsaturated monomer [monomers c)], the amounts of monomers a) to c) adding up to 100% by weight,
in the presence of
B) 5% to 90% by weight of at least one polyalkylene oxide B) composed of at least 3 units of a C2 to C4 alkylene oxide, the total amounts of graft monomers A) and polyalkylene oxide B) adding up to 100% by weight,
wherein
i) ≥ 50% by weight of the total amount of polyalkylene oxide B) and ≤ 10% by weight of the total amount of graft monomers A) are charged to a reaction vessel, then
ii) any remainder of polyalkylene oxide B) and also ≥ 90% by weight of the total amount of graft monomers A) are metered into the reaction vessel under polymerization conditions, with
iii) the major amounts of monomers a) and of monomers b) being metered in parallel in step ii),
iv) the polymerization takes place in the presence of ≥ 2% by weight, based on the sum of the total amounts of graft monomers A) and polyalkylene oxide B), of at least one aprotic organic solvent L), if appropriate a partial amount or the total amount of the solvent L) being introduced as an initial charge in the reaction vessel in step i) and the total amount or any remainder of the solvent L) being metered into the reaction vessel in step ii), and
v) the water content of the polymerization mixture present in the reaction vessel during the polymerization at any time is ≤ 2% by weight, based on the sum of the total amounts of graft monomers A) and polyalkylene oxide B) metered into the reaction vessel at that time.

2. The process according to claim 1, wherein the polymerization is initiated by addition of free-radical initiators.

3. The process according to either of claims 1 and 2,
wherein 20% to 75% by weight of graft monomers A), comprising
a) 10% to 70% by weight of monomers a) and
b) 30% to 90% by weight of monomers b),
and
25% to 80% by weight of polyalkylene oxide B) are used.

4. The process according to any one of claims 1 to 3, wherein monomers a) used are vinyl acetate, vinyl propionate, vinyl butanoate, vinyl hexanoate and/or vinyl octanoate and monomers b) used are N-vinyl-2-pyrrolidone, N-vinylcaprolactam and/or N-vinyl-2-piperidone.

5. The process according to any one of claims 1 to 4, wherein the metered addition of the monomers a) and of the monomers b) in step ii) begins simultaneously and the metering time of the monomers b) is greater than or equal to the metering time of the monomers a).

6. The process according to any one of claims 1 to 5, wherein the polyalkylene oxide B) has an average molecular weight in the range ≥ 300 and ≤ 35 000 g/mol.

7. The process according to any one of claims 1 to 6, wherein the polyalkylene oxide B) is a polyethylene glycol.

8. The process according to any one of claims 1 to 7, wherein the metered addition in step ii) takes place continuously.

9. The process according to any one of claims 1 to 8, wherein water, a monohydric, dihydric or polyhydric alcohol and/or a corresponding monoalkoxy alcohol are/is added to the polymerization mixture after the end of the polymerization reaction.

10. The process according to claim 9, wherein the organic solvent L) is separated off before, during and/or after addition of water, alcohol and/or monoalkoxy alcohol.

11. A graft polymer obtainable by a process according to any one of claims 1 to 10.

12. The use of a graft polymer according to claim 11 for inhibiting gas hydrates.

## Revendications

1. Procédé pour la préparation de produits de polymérisation par greffage, par polymérisation de
A) 10 à 95 % en poids de monomères greffés A), contenant, par rapport à la quantité totale des monomères greffés (A)
a) 1 à 99 % en poids d'au moins un ester vinylique [monomère a)]
b) 1 à 99 % en poids d'au moins un N-vinyllactame [monomère b)] ainsi qu'éventuellement
c) 0 à 10 % en poids d'au moins un autre monomère à insaturation éthylénique [monomère c)], la somme des quantités des monomères a) à c) étant égale à 100 % en poids,
en présence de
B) 5 à 90 % en poids d'au moins un polyoxyalkylène B) qui est constitué d'au moins 3 motifs d'un oxyde d'alkylène en C₂-C₄, la somme des quantités totales des monomères greffés A) et du polyoxyalkylène B) étant égale à 100 % en poids,
**caractérisé en ce que**
i) on dispose au préalable dans un récipient de réaction ≥ 50 % en poids de la quantité totale de polyoxyalkylène B) et ≤ 10 % en poids de la quantité totale de monomères greffés A), puis
ii) on introduit par addition dosée dans le récipient de réaction, dans des conditions de polymérisation, la quantité résiduelle éventuellement restante de polyoxyalkylène B) ainsi que ≥ 90 % en poids de la quantité totale des monomères greffés A),
iii) en introduisant parallèlement par addition dosée les quantités principales des monomères a) et des monomères b) dans l'étape ii) du procédé,
iv) la polymérisation s'effectue en présence de ≥ 2 % en poids, par rapport à la somme des quantités totales de monomères greffés A) et de polyoxyalkylène B), d'au moins un solvant organique aprotique L), dans l'étape i) du procédé une quantité partielle ou la quantité totale du solvant L) étant éventuellement disposée au préalable dans le récipient de réaction et la quantité totale ou, respectivement, la quantité résiduelle éventuellement restante du solvant L) étant introduite dans le récipient de réaction par addition dosée dans l'étape ii) du procédé, et
v) la teneur en eau du mélange de polymérisation se trouvant dans le récipient de réaction pendant la polymérisation étant à chaque instant ≤ 2 % en poids, par rapport à la somme des quantités totales de monomères greffés A) et de polyoxyalkylène B) introduites dans le récipient de réaction par addition dosée à l'instant respectif.

2. Procédé selon la revendication 1, **caractérisé en ce que** la polymérisation est déclenchée par addition d'amorceurs de radicaux.

3. Procédé selon la revendication 1 ou 2, **caractérisé en ce qu'**on utilise 20 à 75 % en poids de monomères greffés A), contenant
a) 10 à 70 % en poids de monomères a) ainsi que
b) 30 à 90 % en poids de monomères b),
et
25 à 80 % en poids de polyoxyalkylène B).

4. Procédé selon l'une quelconque des revendications 1 à 3, **caractérisé en ce qu'**on utilise en tant que monomères a) de l'acétate de vinyle, du propionate de vinyle, du butanoate de vinyle, de l'hexanoate de vinyle et/ou de l'octanoate de vinyle et en tant que monomères b) de la N-vinyl-2-pyrrolidone, du N-vinylcaprolactame et/ou de la N-vinyl-2-pipéridone.

5. Procédé selon l'une quelconque des revendications 1 à 4, **caractérisé en ce que** l'addition dosée des monomères a) et des monomères b) dans l'étape ii) du procédé commence simultanément et le temps d'addition dosée des monomères b) est supérieur ou égal au temps d'addition dosée des monomères a).

6. Procédé selon l'une quelconque des revendications 1 à 5, **caractérisé en ce que** le polyoxyalkylène B) présente une masse moléculaire moyenne dans la plage de ≥ 300 et ≤ 35 000 g/mole.

7. Procédé selon l'une quelconque des revendications 1 à 6, **caractérisé en ce que** le polyoxyalkylène B) est un polyéthylèneglycol.

8. Procédé selon l'une quelconque des revendications 1 à 7, **caractérisé en ce que** l'addition dosée dans l'étape ii) du procédé s'effectue en continu.

9. Procédé selon l'une quelconque des revendications 1 à 8, **caractérisé en ce qu'**après la fin de la réaction de polymérisation on ajoute au mélange de polymérisation de l'eau, un alcool mono- bi- ou polyhydrique et/ou un alcool monoalcoxylé correspondant.

10. Procédé selon la revendication 9, **caractérisé en ce qu'**avant, pendant et/ou après l'addition d'eau, d'alcool et/ou d'alcool monoalcoxylé on sépare le solvant organique L.

11. Produit de polymérisation par greffage pouvant être obtenu conformément à un procédé selon l'une quelconque des revendications 1 à 10.

12. Utilisation d'un produit de polymérisation par greffage selon la revendication 11, pour l'inhibition de la formation d'hydrates de gaz.
